# EUROPÄISCHE PATENTSCHRIFT

(11) **EP 4 342 142 B1**
(45) Veröffentlichungstag und Bekanntmachung des Hinweises auf die Patenterteilung: **23.09.2026**
(21) Anmeldenummer: 22721336.0
(22) Anmeldetag: 07.04.2022
(51) Int. Cl.: H04L 12/413

(54) **VERFAHREN ZUR BEHANDLUNG EINER LANDWIRTSCHAFTLICHEN NUTZFLÄCHE, ERFASSUNGS- UND SPRÜHVORRICHTUNG FÜR EIN LANDWIRTSCHAFTLICHES FAHRZEUG UND COMPUTERPROGRAMMPRODUKT**
METHOD FOR TREATING A USABLE AGRICULTURAL AREA, RECORDING AND SPRAYING DEVICE FOR AN AGRICULTURAL VEHICLE, AND COMPUTER PROGRAM PRODUCT
PROCÉDÉ DE TRAITEMENT D'UNE ZONE AGRICOLE UTILE, DISPOSITIF D'ENREGISTREMENT ET DE PULVÉRISATION POUR UN VÉHICULE AGRICOLE, ET PRODUIT PROGRAMME INFORMATIQUE

(30) Priorität: 20.05.2021 DE 102021205123
(43) Veröffentlichungstag der Anmeldung: 27.03.2024
(73) Patentinhaber: Robert Bosch GmbH, 70442 Stuttgart (DE)
(72) Erfinder: WALTER, Michael, 70806 Kornwestheim (DE)
(86) Internationale Anmeldenummer: PCT/EP2022/059240
(87) Internationale Veröffentlichungsnummer: WO 2022/242953

(56) Entgegenhaltungen:
- DE-A1- 102008 013 602
- DE-B3- 102015 002 324
- US-A1- 2005 189 918

## Beschreibung

### Technisches Gebiet

Die Erfindung betrifft ein Verfahren zur Behandlung einer landwirtschaftlichen Nutzfläche mittels eines vorzugsweise flüssigen Mediums zu Düngezwecken, zur Unkraut- oder Pilzbekämpfung oder für andere derartige Anwendungen. Ferner betrifft die Erfindung eine Erfassungs- und Sprühvorrichtung für ein landwirtschaftliches Fahrzeug mit Steuergeräten, die gemäß einem erfindungsgemäßen Verfahren auf einem CAN-Bussystem miteinander kommunizieren sowie ein Computerprogrammprodukt.

### Stand der Technik

Aus der DE 10 2016 123 539 A1 ist es im Zusammenhang mit einer landwirtschaftlichen Verteilmaschine zur Behandlung einer landwirtschaftlichen Nutzfläche mittels eines vorzugsweise flüssigen Mediums bekannt, ein Hauptsteuergerät zu verwenden, das über ein CAN-Bussystem zur Ansteuerung von lokalen Steuergeräten, die Dosierventilen zugeordnet sind, kommuniziert. Einzelheiten bezüglich einer Synchronisation der einzelnen Steuergeräte zur Ansteuerung von Dosierventilen sind aus der genannten Schrift nicht entnehmbar. Ferner ist es im Zusammenhang mit Automotivanwendungen aus der DE 10 2013 020 802 A1 bekannt, in einem CAN-Netzwerk eines Kraftfahrzeugs eine Zeitsynchronisation durch Referenznachrichten durchzuführen, die von einem Mastersteuergerät in das CAN-Bussystem eingespeist und von Slave-Steuergeräten erfasst werden.

Die DE 10 2008 013 602 A1 offenbart ein Verfahren zum Ansteuern einer Vielzahl von Ventilen, wobei ein erstes Ventil von einem ersten Ansteuersignal angesteuert wird und ein zweites Ventil von einem zweiten Ansteuersignal angesteuert wird.

### Offenbarung der Erfindung

Die Erfindung wird in den unabhängigen Ansprüchen 1, 9, 10 und 11 sowie in den abhängigen Ansprüchen 2-8 definiert. Das erfindungsgemäße Verfahren zur Behandlung einer landwirtschaftlichen Nutzfläche mittels eines vorzugsweise flüssigen Mediums mit den Merkmalen des Anspruchs 1 hat den Vorteil, dass es im Zusammenhang mit bildaufnehmenden Sensoreinheiten zur Erfassung von auf der Nutzfläche befindlichem Bewuchs und den bildaufnehmenden Sensoreinheiten zugeordneten Dosierventilen zum Ausbringen des vorzugsweise flüssigen Mediums eine hochpräzise Ansteuerung der Dosierventile bei Verwendung eines CAN-Bussystems ermöglicht. Dies ermöglicht eine Minimierung des Medienverbrauchs bei lokal präzisem Ausbringen des Mediums auf die Nutzfläche bzw. den Bewuchs.

Der Erfindung liegt die Idee zugrunde, die bei dem Versenden von Informationen bzw. Daten auf dem wenigstens einen CAN-Bussystem zwangsweise entstehenden, variablen Verzögerungen bzw. Laufzeiten durch eine Synchronisation zwischen einem Hauptsteuergerät, lokalen Steuergeräten (die den bildaufnehmenden Sensoreinheiten zugeordnet sind), und Dosiersteuergeräten zu berücksichtigen. Dies erfolgt dadurch, dass durch Starten eines ersten Zählers in dem Hauptsteuergerät, eines zweiten Zählers in dem jeweiligen lokalen Steuergerät und eines dritten Zählers in dem jeweiligen Dosiersteuergerät und Erfassen des Zählerstands des ersten Zählers durch die lokalen Steuergeräte und die Dosiersteuergeräte unter Berücksichtigung der Differenz der Zählerstände der einzelnen Steuergeräte eine hochpräzise Ansteuerung des Dosierventils durch das Dosiersteuergerät ermöglicht wird. Vorteilhafte Weiterbildungen des erfindungsgemäßen Verfahrens zur Behandlung einer landwirtschaftlichen Nutzfläche mittels eines vorzugsweise flüssigen Mediums sind in den Unteransprüchen aufgeführt.

In einer ersten bevorzugten Ausgestaltung des Verfahrens ist es vorgesehen, dass der Zählerstand des ersten Zählers in regelmäßigen Abständen über das wenigstens eine CAN-Bussystem versendet wird, wobei unmittelbar vor dem Versenden des Zählerstands des ersten Zählers ein Callback zur Aktualisierung des ersten Zählerstands durchgeführt wird, und dass die Differenz zwischen dem Zählerstand des ersten Zählers und des zweiten Zählers sowie die Differenz zwischen dem Zählerstand des ersten Zählers und des dritten Zählers bei jedem Empfang durch das lokale Steuergerät und das Dosiersteuergerät berechnet und abgespeichert wird. Dabei beträgt der regelmäßige Abstand zwischen dem Versenden von aktuellen Zählerständen des Hauptsteuergeräts beispielsweise 100 ms. Ein soweit beschriebenes regelmäßiges Wiederholen von aktuellen Zählerständen des Hauptsteuergeräts bewirkt, dass die Toleranzen in der Übertragungsdauer minimiert werden, sodass hochpräzise Synchronisation der einzelnen Steuergeräte erzielt wird, was die Dosiergenauigkeit beim Ausbringen des Mediums begünstigt. Außerdem lassen sich dadurch Toleranzen und Temperaturabhängigkeiten der einzelnen, (eigentlich) gleich schnell laufenden Zähler zwischen den einzelnen Steuergeräten ausgleichen.

In einer bevorzugten Variante dieses Verfahrens ist es vorgesehen, dass beim Empfang des Zählerstands des ersten Zählers in dem zweiten Zähler und dem dritten Zähler unmittelbar ein Callback zur Erfassung des Zählerstands des zweiten Zählers und des dritten Zählers durchgeführt wird. Dadurch lassen sich Berechnungsfehler bei der Differenzberechnung der Zählerstände, hervorgerufen durch variable, interne Verzögerungen in den lokalen Steuergeräten sowie den Dosiersteuergeräten, minimieren.

Um eine hochpräzise Berechnung der Differenzen der Zählerstände zu ermöglichen, ist es bevorzugt vorgesehen, dass die Schritte der Zählerstände der Zähler in einem Zeitabstand von 1µs hochgezählt werden. Insbesondere ist es vorgesehen, dass der Zähler in Schritten von 0 bis 2³²-1 Schritten hochgezählt wird, dass dann der Zähler überläuft und wieder bei Null startet. Hierzu weisen die Prozessoren der einzelnen Steuergeräte entsprechende Quarze auf, was bei der angesprochenen Schrittanzahl zu einer für übliche Anwendungen ausreichende Zeitdauer von mehr als 70 Minuten führt, bevor der Zähler überläuft bzw. wieder bei Null startet.

Auch ist es besonders bevorzugt vorgesehen, dass die Informationen der lokalen Steuergeräte einzeln in einer festgelegten Reihenfolge und festgelegten Abständen in das wenigstens eine CAN-Bussystem eingespeist werden. Dies reduziert die erforderliche Buslast bzw. den Systemaufwand. Typische Wiederholungsraten bei der Bildaufnahme durch die Sensoreinheiten betragen dabei 15 Hz.

Dadurch, dass eine Synchronisation zwischen den Zählerstanden der Steuergeräte erfolgt, ist es nicht erforderlich, die Zähler der an dem Netzwerk eingebundenen Steuergeräte zum selben Zeitpunkt zu starten, wodurch der erforderliche System- und Softwareaufwand weiter reduziert wird. Dadurch kann auch ein Steuergerät, das abstürzt und neu bootet, ohne Zusatzaufwand wieder innerhalb sehr kurzer Zeit präzise an der Zeitsynchronisation teilnehmen.

Auch kann es vorgesehen sein, dass die Dauer einer von dem Hauptsteuergerät versendeten Nachricht bzgl. des ersten Zählerstands zwischen dem Versenden der Nachricht und dem Empfang durch das lokale Steuergerät und/oder das Dosiersteuergerät erfasst und bei der Berechnung der Differenz zwischen dem ersten Zählerstand und dem zweiten Zählerstand sowie zwischen dem ersten Zählerstand und dem dritten Zählerstand berücksichtigt wird. Es lassen sich somit mittlere Laufzeiten einer Zeitnachricht des Hauptsteuergeräts bei der Berücksichtigung des lokalen Offsets berücksichtigen.

Zur zeitgerechten Ansteuerung der einzelnen Dosierventile ist es darüber hinaus von Vorteil, wenn die Berechnung des Zeitpunkts der Aktivierung des Dosierventils durch das Dosiersteuergerät anhand der Geometrie und/oder der Anordnung des Erfassungsbereichs der Sensoreinheit und des Dosierventils zur landwirtschaftlichen Nutzfläche, einer Fahrgeschwindigkeit eines die Erfassungs- und Sprühvorrichtung tragenden landwirtschaftlichen Fahrzeugs in Fahrtrichtung sowie von Parametern des Dosierventils erfolgt.

Weiterhin umfasst die Erfindung eine Erfassungs- und Sprühvorrichtung für ein landwirtschaftliches Fahrzeug, wobei die Erfassungs- und Sprühvorrichtung mehrere vorzugsweise bildaufnehmende Sensoreinheiten, mehrere den Sensoreinheiten zugeordnete Dosierventile, mehrere lokale, den bildaufnehmenden Sensoreinheiten zugeordnete Steuergeräte und mehrere, den Dosierventilen zugeordnete Dosiersteuergeräte aufweist. Weiterhin umfasst die Erfassungs- und Sprühvorrichtung ein Hauptsteuergerät, wobei das Hauptsteuergerät, die lokalen Steuergeräte und die Dosiersteuergeräte zur Datenübertragung mittels wenigstens eines CAN-Bussystems datentechnisch miteinander verbunden sind, und wobei das Hauptsteuergerät, die lokalen Steuergeräte und die Dosiersteuergeräte dazu ausgebildet sind, ein soweit beschriebenes, erfindungsgemäßen Verfahren auszuführen.

Zuletzt umfasst die Erfindung auch ein Computerprogrammprodukt umfassend Befehle, die, wenn sie auf einem Prozessor ausgeführt werden, alle Verfahrensschritte eines erfindungsgemäßen Verfahrens ausführen.

Weitere Vorteile, Merkmale und Einzelheiten der Erfindung ergeben sich aus der nachfolgenden Beschreibung bevorzugter Ausführungsformen der Erfindung sowie anhand der Zeichnungen.

### Kurze Beschreibung der Zeichnungen

- Fig. 1: zeigt in einer vereinfachten Draufsicht ein landwirtschaftliches Fahrzeug zur Behandlung einer Nutzfläche mittels eines vorzugsweise flüssigen Spritzmittels,
- Fig. 2: eine Darstellung der Anordnung einer bildaufnehmenden Sensoreinheit und eines Dosierventils und
- Fig. 3: ein Ablaufdiagramm zur Erläuterung einer Zeitsynchronisation an einer Erfassungs- und Sprühvorrichtung.

### Ausführungsformen der Erfindung

Gleiche Elemente bzw. Elemente mit gleicher Funktion sind in den Figuren mit den gleichen Bezugsziffern versehen.

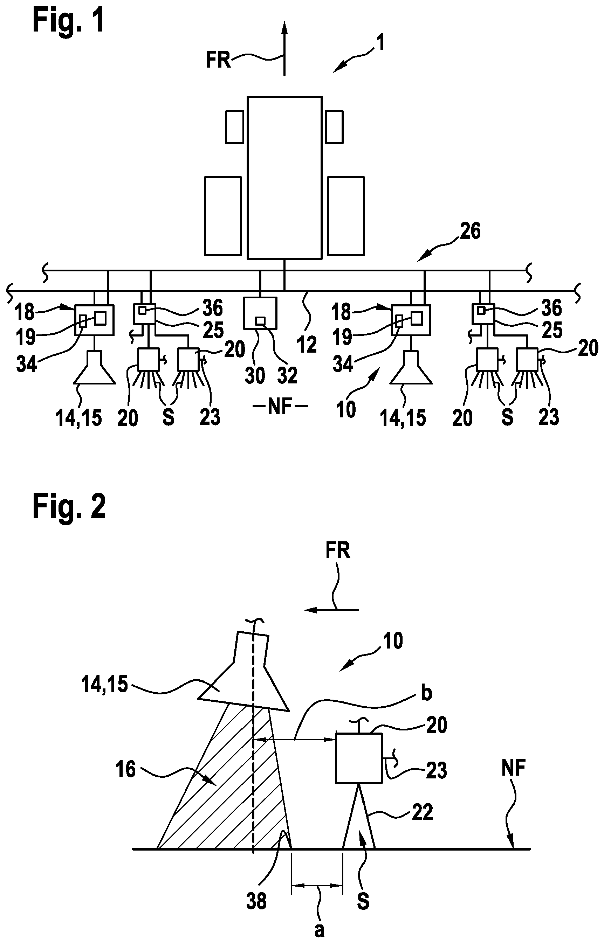

In der Fig. 1 ist ein landwirtschaftliches Fahrzeug 1 vereinfacht dargestellt, das zur Behandlung einer landwirtschaftlichen Nutzfläche NF in einer Fahrtrichtung FR fährt. Bei der Behandlung der landwirtschaftlichen Nutzfläche NF handelt es sich vorzugsweise um eine Behandlung von auf der Nutzfläche NF befindlichen Pflanzen oder Unkraut mit einem insbesondere flüssigen Spritzmittel S. Je nach Art der Behandlung kann es sich dabei um einen Dünger, ein Pestizid, ein Fungizid o.ä. Spritzmittel S bzw. Medium handeln.

Das flüssige Spritzmittel S bzw. Medium ist darüber hinaus, wie an sich bekannt und daher nicht dargestellt, am landwirtschaftlichen Fahrzeug 1 im Bereich eines Vorratsspeichers bevorratet.

Das landwirtschaftliche Fahrzeug 1 weist beispielsweise an seinem Heckbereich eine Erfassungs- und Sprühvorrichtung 10 auf, die ein sich quer zur Fahrtrichtung FR des landwirtschaftlichen Fahrzeugs 1 erstreckendes Trägerelement in Form eines Gestells 12 hat. Im Bereich des Gestells 12 sind in Längsrichtung des Gestells 12, vorzugsweise in gleichmäßigen Abständen zueinander, eine Vielzahl von bildaufnehmenden Sensoreinheiten 14 in Form von Kameras 15 angeordnet. Üblicherweise sind über die gesamte Breite bzw. Länge des Gestells 12 zwischen 24 und 36 derartiger Sensoreinheiten 14 bzw. Kameras 15, die insbesondere alle identisch ausgebildet sind, vorgesehen. Dabei weist eine Sensoreinheit 14 bzw. Kamera 15 typischerweise eine Arbeitsbreite in Längsrichtung des Gestells 12 betrachtet von 1,0 m oder 1,5 m auf. Daraus resultiert bei der angegebenen Anzahl von Sensoreinheiten 14 bzw. Kameras 15 eine Länge des Gestells 12 in Längsrichtung von typischerweise 36m, wobei die Länge des Gestells 12 zwischen etwa 15m und 50m betragen kann, mit einer entsprechend angepassten Anzahl von Sensoreinheiten 14 bzw. Kameras 15.

Entsprechend der Darstellung der Fig. 2 weist eine Sensoreinheit 14 einen Erfassungsbereich 16 in Fahrtrichtung FR auf, in dem Pflanzenbewuchs bzw. Bewuchs von Unkraut durch die Kamera 15 bzw. die Sensoreinheit 14 auf der Nutzfläche NF erfassbar ist. Jeder Sensoreinheit 14 ist darüber hinaus ein lokales Steuergerät 18 zugeordnet, das insbesondere der Auswertung der Kamerabilder mittels eines entsprechenden Algorithmus 19 dient. Eine Sensoreinheit 14 bzw. Kamera 15 ist zusammen mit dem lokalen Steuergerät 18 vorzugsweise in einem gemeinsamen Gehäuse (nicht dargestellt) angeordnet.

Weiterhin sind jeder Sensoreinheit 14 wenigstens ein Dosierventil 20, typischerweise mehrere Dosierventile 20 mit etwa 25 cm oder 50cm Abstand zwischen den Dosierventilen 20 in Längsrichtung des Gestells 12 zum Ausbringen bzw. Sprühen des angesprochenen flüssigen Mediums bzw. Spritzmittels S zugeordnet. Bei einer Arbeitsbreite einer Sensoreinheit 14 bzw. einer Kamera 15 sind dieser somit zwischen 4 und 6 Dosierventilen 20 zugeordnet.

Entsprechend der Darstellung der Fig. 2 weist das Dosierventil 20 beispielsweise einen Sprühkegel 22 auf, der sich in einem ersten Abstand a in Höhe der Nutzfläche NF an den Erfassungsbereich 16 anschließt. Weiterhin ist die Anordnung des Dosierventils 20 zur Sensoreinheit 14 derart, dass zwischen der Sensoreinheit 14 und dem Dosierventil 20 in Fahrtrichtung FR betrachtet ein zweiter Abstand b vorhanden ist, derart, dass die Anordnung des Dosierventils 20 in Fahrtrichtung FR betrachtet hinter der Sensoreinheit 14 ist.

Die Ansteuerung der einer Sensoreinheit 14 zugeordneten Dosierventile 20, die jeweils über eine unter Druck stehende Flüssigkeitsleitung 23 mit dem angesprochenen Vorratsbehälter für das Medium bzw. Spritzmittel S verbunden sind, erfolgt insbesondere über jeweils einen Magnetaktuator des Dosierventils 20, die beispielhaft von einem Dosiersteuergerät 25 mit entsprechenden Endstufen ansteuerbar sind (alternativ können die Endstufen auch direkt an den Dosierventilen 20 angeordnet sein, wobei dann ggf. Änderungen an dem nachfolgend beschriebenen Aufbau erforderlich sind).

Sowohl die einzelnen lokalen Steuergeräte 18, als auch die (lokalen) Dosiersteuergeräte 25 sind über Datenleitungen mit einem CAN-Bussystem 26 gekoppelt. Alternativ ist es auch denkbar, dass die Sensoreinheiten 14 bzw. Kameras 15 und die Dosiersteuergeräte 25 auf separaten CAN-Bussystemen miteinander kommunizieren (nicht dargestellt). Über das CAN-Bussystem 26 erfolgt eine Kommunikation mit einem Hauptsteuergerät 30. Im Ausführungsbeispiel ist das Hauptsteuergerät 30 als ein von den (lokalen) Dosiersteuergeräten 25 separates Steuergerät dargestellt. Es kann jedoch auch vorgesehen sein, dass eines der (lokalen) Dosiersteuergeräte 25 (zusätzlich) die Funktionalität des Hauptsteuergeräts 30 aufweist.

Insbesondere werden von dem Hauptsteuergerät 30 nach Empfang entsprechender Daten bzw. Informationen von den lokalen Steuergeräten 18 über eine erforderliche Ansteuerung entsprechender Dosierventile 20 zum Ausbringen des Spritzmittels S bzw. Mediums Startzeitpunkte und Ansteuerzeiten der Dosierventile 20 berechnet. Dies dient dazu, dass ein Dosierventil 20 von seinem Dosiersteuergerät 25 bedarfsgerecht so angesteuert wird, dass eine gezielte Behandlung des entsprechenden Pflanzen- bzw. Unkrautbewuchses auf der Nutzfläche NF ermöglicht wird.

Der Datenaustausch zwischen den lokalen Steuergeräten 18, den Dosiersteuergeräten 25 und dem Hauptsteuergerät 30 auf dem CAN-Bussystem 26 erfolgt in einer festgelegten Reihenfolge, wobei der Datenaustausch eine variable Zeitverzögerung zwischen dem Empfangen bzw. Versenden entsprechender Daten auf dem CAN-Bussystem 26 aufweist.

Zur Zeitsynchronisation des Hauptsteuergeräts 30, der lokalen Steuergeräte 18 und der Dosiersteuergeräte 25 sind diese zusätzlich speziell ausgebildet. So weist das Hauptsteuergerät 30 einen ersten Zähler 32 auf, der in 1 µs-Schritten von 0 bis 2³² -1 hochzählt und dann wieder bei Null startet. Der aktuelle Zählerstand des ersten Zählers 32 wird beispielsweise alle 100 ms von dem Hauptsteuergerät 30 über das CAN-Bussystem 26 übermittelt. Hierbei wird insbesondere darauf geachtet, dass die Nachricht des aktuellen Zählerstands des ersten Zählers 32 die höchste Priorität auf dem CAN-Bussystem 26 hat, und zum anderen der Zählerstand unmittelbar vor dem Versenden nochmal über einen sogenannten Callback aktualisiert wird. Dadurch wird erreicht, dass die Toleranzen der Übertragungsdauer auf dem CAN-Bussystem 26 minimiert werden. Weiterhin weist jedes lokales Steuergerät 18 einen zweiten Zähler 34, und jedes Dosiersteuergerät 25 einen dritten Zähler 36 auf. Auch diese Zähler 34 und 36 zählen ebenfalls in 1 µs-Schritten von 0 bis 2³² -1, dann laufen auch deren Zähler 34, 36 über und starten wieder bei Null. Wesentlich dabei auch, dass die Zähler 32, 34 und 36 nicht zum selben Zeitpunkt eingeschaltet werden bzw. starten müssen.

Sobald die lokalen Steuergeräte 18 und die Dosiersteuergeräte 25 den Zählerstand des ersten Zählers 32 über das CAN-Bussystem 26 empfangen wird ein Callback ausgelöst, der den eigenen Zähler 34, 36 sofort beim Empfang der Zeitnachricht des Hauptsteuergeräts 30 bzw. des Zählerstands des ersten Zählers 32 erfasst. Anschließend wird die Differenz zwischen dem Zählerstand des ersten Zählers 32 (d.h. des Hauptsteuergeräts 30) und dem Zählerstand des zweiten Zählers 34 und zwischen dem ersten Zähler 32 und dem dritten Zähler 36 erfasst. Die entsprechenden Differenzen (Offsets) werden gespeichert. Besonders vorteilhaft ist es, diese Differenzen durch geeignete Filteralgorithmen zu glätten (Median, PT1, gleitender Mittelwert o.ä.).

Die Zähler 32, 34 und 36 des Hauptsteuergeräts 30, der lokalen Steuergeräte 18 und der Dosiersteuergeräte 25 laufen alle auf Basis eines Quarzes des Prozessortakts und sind sehr stabil. Somit kann im Zeitraum von einigen Minuten davon ausgegangen werden, dass die Werte des individuellen Offsets ziemlich stabil sind.

Sobald eine Sensoreinheit 14 ein Bild der Nutzfläche NF macht, erfasst sie ihren lokalen Zeitstempel (Zählerstand) auf Basis des eigenen Zählers 34. Diesen rechnet sie durch Addition des Offsets in einen entsprechenden Zählerstand des ersten Zählers 32 um. Das von der Sensoreinheit 14 erfasste Bild wird im lokalen Steuergerät 18 mit variabler Rechnerlaufzeit verarbeitet, worauf anschließend beim Erfordernis eines Ausbringens von Spritzmittel S bzw. Medium diese Information über das CAN-Bussystem 26 an das Hauptsteuergerät 30 verschickt wird. Dabei wird der Zeitpunkt der Bilderfassung durch die Sensoreinheit 14 gemäß dem Zählerstand des ersten Zählers 32 in der Nachricht auf dem CAN-Bussystem 26 mit eingetragen. Die Nachricht wird mit normaler CAN-Übertragung über das CAN-Bussystem 26 geschickt, d.h. mit variabler Laufzeit. Das Hauptsteuergerät 30 empfängt die Nachricht und berechnet für das im Bild (Ausschnitt) der Sensoreinheit 14 zugeordnete wenigstens eine Dosierventil 20 den Zeitpunkt in der Zukunft (in Bezug auf den Zählerstand des ersten Zählers 32), wann das entsprechende Dosierventil 20 eingeschaltet werden muss, sowie dessen Einschaltdauer. Daraus wird eine Anforderungsnachricht an das jeweilige lokale Dosiersteuergerät 25 berechnet, welcher den Startzeitpunkt und die Spraydauer beinhaltet. Das entsprechende Dosiersteuergerät 25 empfängt die Nachricht und rechnet den Zeitpunkt in die eigene lokale Zeit entsprechend dem Zählerstand des dritten Zählers 36 um durch Subtraktion des eigenen lokalen Offsets und dem von dem Hauptsteuergerät 30 empfangenen Startzeitpunkt. Danach wartet das Dosiersteuergerät 25 bis zu diesem Zeitpunkt ab und löst dann exakt zum gewünschten Zeitpunkt die Ansteuerung des wenigstens einen Dosierventils 20 aus.

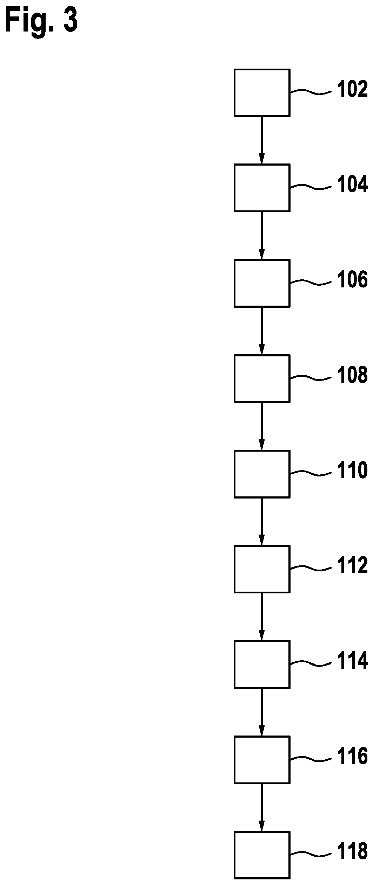

Mit Blick auf den soweit beschriebenen zeitlichen Ablauf wird nachfolgend auf das Ablaufdiagramm der Fig. 3 verwiesen. Darin wird der Informationsaustausch zwischen einem lokalen Steuergerät 18, dem Hauptsteuergerät 30 und dem lokalen Steuergerät 18 zugeordneten Dosiersteuergerät 25 wie folgt erläutert:
In einem ersten Schritt 102 wird ein Bild der Nutzfläche NF von einer Sensoreinheit 14 erfasst. Anschließend erfolgt in einem zweiten Schritt 104 ein Laden der Bildinformation in den Speicher des lokalen Steuergeräts 18. Anschließend erfolgt in einem dritten Schritt 106 eine Auswertung der Bilddaten durch den Algorithmus 19 in dem lokalen Steuergerät 18 mit der Entscheidung, ob eine Behandlung innerhalb eines lokalen Gebiets der Nutzfläche NF erforderlich ist. Ist dies der Fall, erfolgt in einem vierten Schritt 108 das Versenden einer entsprechenden Nachricht von dem lokalen Steuergerät 18 über das CAN-Bussystem 26 an das Hauptsteuergerät 30. Der Nachricht ist darüber hinaus der Zählerstand des zweiten Zählers 34 zum Zeitpunkt der Aufnahme des Bilds durch die Sensoreinheit 14 beigefügt. Anschließend erfolgt in einem fünften Schritt 110 der Empfang der entsprechenden Nachricht durch das Hauptsteuergerät 30. In einem sechsten Schritt 112 erfolgt anschließend die Berechnung eines Zeitpunkts (in der nahen Zukunft) durch das Hauptsteuergerät 30, zu dem ein zur Behandlung der Nutzfläche NF benötigtes Dosierventil 20 angesteuert werden muss. Dies erfolgt auf Basis der Geometrie der Anordnung der Sensoreinheit 14, der Geschwindigkeit des Dosierventils 20 bzw. des Fahrzeugs 1 über der Nutzfläche NF, der Ventilöffnungszeit, der Sprayflugdauer vom Dosierventil 20 bis auf den Boden der Nutzfläche NF und anderen Parametern. Anschließend erfolgt in einem siebten Schritt 114 ein Versenden eines entsprechenden Sprayauftrags durch das Hauptsteuergerät 30 für das entsprechende Dosierventil 20 auf dem CAN-Bussystem 26. In einem achten Schritt 116 erfolgt anschließend der Empfang der entsprechenden Nachricht durch das lokale Dosiersteuergerät 25. Dieses wertet den Zeitpunkt aus, an dem das entsprechende Dosierventil 20 angesteuert werden soll und wartet diesen Zeitpunkt ab, bis dieser erreicht ist. Zuletzt erfolgt entsprechend eines neunten Schritts 118 eine Ansteuerung des Dosierventils 20, sodass das Medium bzw. Spritzmittel genau im Bereich einer Bildunterkante 38 (Fig. 2) des zum Zeitpunkt der Aufnahme gemachten Bildes beginnt. Die Dosierung erfolgt solange, bis das Spritzmittel S bzw. Medium genau die Höhe des Bildes in Fahrtrichtung FR überstrichen hat.

Das soweit beschriebene Verfahren kann in vielfältiger Art und Weise abgewandelt bzw. modifiziert werden, ohne vom Erfindungsgedanken abzuweichen. So kann es beispielsweise vorgesehen sein, eine mittlere Laufzeit einer Zeitnachricht des Hauptsteuergeräts 30 auf dem CAN-Bussystem 26 auszumessen und bei der Berechnung des eigenen Offsets der Zählerstände 34 und 36 der lokalen Steuergeräte 18 und der Dosiersteuergeräte 25 zu berücksichtigen. Weiterhin kann jeder Teilnehmer der Synchronisation auch den eigenen adaptierten Offset über das CAN-Bussystem 26 an alle anderen Teilnehmer verteilen. Beim Versenden einer zeitbezogenen Nachricht wird die lokale Zeit des Versenders und eine ID des Versenders eingetragen. Der Empfänger macht dann auf Basis des schon bekannten Offsets des Versenders und des eigenen adaptierten Offsets die Transformation in die eigene Zeit bzw. den eigenen Zählerstand. Wahlweise braucht auch die ID des Versenders nicht mitgesendet werden, wenn über die Message-ID der CAN-Nachricht der Versender eindeutig bestimmt ist.

Auch wurde das landwirtschaftliche Fahrzeug 1 mit einer an seinem Heckbereich angeordneten Erfassungs- und Sprüheinrichtung 10 beschrieben und dargestellt. In den Rahmen der Erfindung sollen jedoch auch solche landwirtschaftliche Fahrzeuge 1 fallen, bei denen die Erfassungs- und Sprüheinrichtung 10 beispielsweise in Form eines gezogenen Hängers o.ä. ausgebildet bzw. angeordnet ist. Auch sollen selbstfahrende Fahrzeuge 1 von der Offenbarung der Anmeldung umfasst sein.

## Patentansprüche

1. Verfahren zur Behandlung einer landwirtschaftlichen Nutzfläche (NF) mittels eines vorzugsweise flüssigen Mediums bzw. Spritzmittels (S), wobei die zu behandelnde Nutzfläche (NF) beim Überfahren der Nutzfläche (NF) quer zu einer Fahrtrichtung (FR) einer Erfassungs- und Sprühvorrichtung (10) mittels mehrerer, jeweils einen Erfassungsbereich (16) aufweisender bildaufnehmender Sensoreinheiten (14) erfasst wird, wobei die Bildinformationen einer Sensoreinheit (14) mittels eines der Sensoreinheit (14) zugeordneten lokalen Steuergeräts (18) verarbeitet werden, wobei Informationen bei der Notwendigkeit der Ansteuerung wenigstens eines, dem jeweiligen Erfassungsbereich (16) zugeordneten Dosierventils (20) für das Medium bzw. Spritzmittel (S) zwischen dem lokalen Steuergerät (18) und einem Hauptsteuergerät (30) auf wenigstens einem CAN-Bussystem (26) übermittelt werden, wobei das Hauptsteuergerät (30) einen Zeitpunkt zur Ansteuerung des Dosierventils (20) berechnet und den Zeitpunkt an ein dem Dosierventil (20) zugeordnetes lokales Dosiersteuergerät (25) über das wenigstens eine CAN-Bussystem (26) übermittelt, und wobei eine Synchronisation zwischen dem Hauptsteuergerät (30), dem lokalen Steuergerät (18) und dem Dosiersteuergerät (25) zur zeitgenauen Aktivierung des Dosierventils (20) durch Starten eines ersten Zählers (32) in dem Hauptsteuergerät (30), eines zweiten Zählers (34) in dem lokalen Steuergerät (18) und eines dritten Zählers (36) in dem Dosiersteuergerät (25) erfolgt, indem der Zählerstand des ersten Zählers (32) von den beiden anderen Zählern (34, 36) erfasst und eine Differenz der Zählerstände bei der Ansteuerung des Dosierventils (20) durch das Dosiersteuergerät (25) berücksichtigt wird.

2. Verfahren nach Anspruch 1,
**dadurch gekennzeichnet,**
**dass** der Zählerstand des ersten Zählers (32) in regelmäßigen Abständen über das wenigstens eine CAN-Bussystem (26) versendet wird, wobei unmittelbar vor dem Versenden des Zählerstands des ersten Zählers (32) ein Callback zur Aktualisierung des ersten Zählerstands durchgeführt wird, und dass die Differenz zwischen dem Zählerstand des ersten Zählers (32) und des zweiten Zählers (34) sowie die Differenz zwischen dem Zählerstand des ersten Zählers (32) und des dritten Zählers (36) bei jedem Empfang durch das lokale Steuergerät (18) und das Dosiersteuergerät (25) berechnet und abgespeichert wird.

3. Verfahren nach Anspruch 2,
**dadurch gekennzeichnet,**
**dass** beim Empfang des Zählerstands des ersten Zählers (32) in dem zweiten Zähler (34) und dem dritten Zähler (36) unmittelbar ein Callback zur Erfassung des Zählerstands des zweiten Zählers (34) und des dritten Zählers (36) durchgeführt wird.

4. Verfahren nach einem der Ansprüche 1 bis 3,
**dadurch gekennzeichnet,**
**dass** die Zähler (32, 34, 36) einen Umfang von 2³² - 1 Schritten aufweisen, bevor diese überlaufen und wieder bei 0 starten, wobei beim Hochzählen der Zähler (32, 34, 36) zwischen zwei Schritten vorzugsweise ein Zeitabstand von 1 µs vorgesehen ist.

5. Verfahren nach einem der Ansprüche 1 bis 4,
**dadurch gekennzeichnet,**
**dass** die Informationen der lokalen Steuergeräte (18) einzeln in festgelegter Reihenfolge und in festgelegten Abständen in das wenigstens eine CAN-Bussystem (26) eingespeist werden.

6. Verfahren nach einem der Ansprüche 1 bis 5,
**dadurch gekennzeichnet,**
**dass** das Starten der drei Zähler (32, 34, 36) zu unterschiedlichen Zeitpunkten erfolgt.

7. Verfahren nach einem der Ansprüche 1 bis 6,
**dadurch gekennzeichnet,**
**dass** die Dauer einer von dem Hauptsteuergerät (30) versendeten Nachricht bzgl. des Zählerstands des ersten Zählers (32) zwischen dem Versenden der Nachricht und dem Empfang durch das lokale Steuergerät (18) und/oder das Dosiersteuergerät (25) erfasst und bei der Berechnung der Differenz zwischen dem Zählerstand des ersten Zählers (32) und dem Zählerstand des zweiten Zählers (34) sowie zwischen dem Zählerstand des ersten Zählers (32) und dem Zählerstand des dritten Zählers (36) berücksichtigt wird.

8. Verfahren nach einem der Ansprüche 1 bis 7,
**dadurch gekennzeichnet,**
**dass** die Berechnung des Zeitpunkts der Aktivierung des Dosierventils (20) durch das Dosiersteuergerät (25) anhand der Geometrie und/oder der Anordnung des Erfassungsbereichs (16) der Sensoreinheit (14) und des Dosierventils (20) zur landwirtschaftlichen Nutzfläche (NF), einer Fahrgeschwindigkeit eines die Erfassungs- und Sprühvorrichtung (10) tragenden landwirtschaftlichen Fahrzeugs (1) in Fahrtrichtung (FR) sowie von Parametern des Dosierventils (20) erfolgt.

9. Erfassungs- und Sprühvorrichtung (10) für ein landwirtschaftliches Fahrzeug (1), aufweisend mehrere bildaufnehmende Sensoreinheiten (14), mehrere, den Sensoreinheiten (14) zugeordnete Dosierventile (20), mehrere, den bildaufnehmenden Sensoreinheiten (14) zugeordnete lokale Steuergeräte (18) und mehrere, den Dosierventilen (20) zugeordnete Dosiersteuergeräte (25), sowie mit einem Hauptsteuergerät (30), wobei das Hauptsteuergerät (30), die lokalen Steuergeräte (18) und die Dosiersteuergeräte (25) zur Datenübertragung mittels wenigstens eines CAN-Bussystems (26) miteinander verbunden sind, und wobei das Hauptsteuergerät (30), die lokalen Steuergeräte (18) und die Dosiersteuergeräte (25) dazu ausgebildet sind, ein Verfahren nach einem der Ansprüche 1 bis 8 auszuführen.

10. Computerprogrammprodukt umfassend Befehle, die, wenn sie auf einem Prozessor ausgeführt werden, alle Verfahrensschritte nach einem der Ansprüche 1 bis 8 ausführen.

11. Datenträger mit Mitteln zum Speichern des Computerprogramms des Anspruchs 10.

## Claims

1. Method for treating a usable agricultural area (NF) using a preferably liquid medium or spraying agent (S), wherein, when the usable area (NF) is driven over, the usable area (NF) to be treated is recorded transversely to a direction of travel (FR) of a recording and spraying device (10) using a plurality of image-capturing sensor units (14) which each have a recording range (16), wherein the image information from a sensor unit (14) is processed using a local controller (18) assigned to the sensor unit (14), wherein, when it is necessary to actuate at least one metering valve (20) assigned to the respective recording range (16) for the medium or spraying agent (S), information is transmitted between the local controller (18) and a main controller (30) on at least one CAN bus system (26), wherein the main controller (30) calculates a time for the actuation of the metering valve (20) and transmits the time via the at least one CAN bus system (26) to a local metering controller (25) assigned to the metering valve (20), and wherein a synchronization between the main controller (30), the local controller (18) and the metering controller (25) for the precisely timed activation of the metering valve (20) is carried out by starting a first counter (32) in the main controller (30), a second counter (34) in the local controller (18) and a third counter (36) in the metering controller (25) by virtue of the counter reading of the first counter (32) being recorded by the two other counters (34, 36), and a difference between the counter readings being taken into account in the actuation of the metering valve (20) by the metering controller (25).

2. Method according to Claim 1,
**characterized**
**in that** the counter reading of the first counter (32) is sent at regular intervals via the at least one CAN bus system (26), wherein, immediately before the counter reading of the first counter (32) is sent, a callback for updating the first counter reading is carried out, and in that the difference between the counter reading of the first counter (32) and of the second counter (34) and the difference between the counter reading of the first counter (32) and of the third counter (36) is calculated and stored each time they are received by the local controller (18) and the metering controller (25).

3. Method according to Claim 2,
**characterized**
**in that**, when the counter reading of the first counter (32) is received in the second counter (34) and the third counter (36), a callback is immediately carried out to record the counter reading of the second counter (34) and of the third counter (36).

4. Method according to one of Claims 1 to 3,
**characterized**
**in that** the counters (32, 34, 36) have a range of 2³² - 1 steps before they run over and start again at 0, wherein, when the counters (32, 34, 36) count up, a time interval of 1 µs is preferably provided between two steps.

5. Method according to one of Claims 1 to 4,
**characterized**
**in that** the information from the local controllers (18) is fed individually into the at least one CAN bus system (26) in a specified sequence and at specified intervals.

6. Method according to one of Claims 1 to 5,
**characterized**
**in that** the three counters (32, 34, 36) are started at different times.

7. Method according to one of Claims 1 to 6,
**characterized**
**in that** the duration of a message sent by the main controller (30) relating to the counter reading of the first counter (32) between the sending of the message and its receipt by the local controller (18) and/or the metering controller (25) is recorded and taken into account in the calculation of the difference between the counter reading of the first counter (32) and the counter reading of the second counter (34), and between the counter reading of the first counter (32) and the counter reading of the third counter (36).

8. Method according to one of Claims 1 to 7,
**characterized**
**in that** the time of activation of the metering valve (20) by the metering controller (25) is calculated based on the geometry and/or arrangement of the recording range (16) of the sensor unit (14) and the metering valve (20) with respect to the useful agricultural area (NF), a driving speed of an agricultural vehicle (1) carrying the recording and spraying device (10) in the direction of travel (FR) and parameters of the metering valve (20).

9. Recording and spraying device (10) for an agricultural vehicle (1), comprising a plurality of image-capturing sensor units (14), a plurality of metering valves (20) assigned to the sensor units (14), a plurality of local controllers (18) assigned to the image-capturing sensor units (14) and a plurality of metering controllers (25) assigned to the metering valves (20), and also having a main controller (30), wherein the main controller (30), the local controllers (18) and the metering controllers (25) are connected to one another for data transmission by means of at least one CAN bus system (26), and wherein the main controller (30), the local controllers (18) and the metering controllers (25) are configured to perform a method according to one of Claims 1 to 8.

10. Computer program product comprising commands which, when executed on a processor, perform all of the method steps according to one of Claims 1 to 8.

11. Data medium having means for storing the computer program of Claim 10.

## Revendications

1. Procédé de traitement d'une zone utile (NF) agricole au moyen d'un fluide ou d'un agent de pulvérisation (S) de préférence liquide, la zone utile (NF) à traiter étant capturée au moyen d'une pluralité d'unités de détection (14) d'enregistrement d'image présentant chacune une zone de capture (16), lors du franchissement de la zone utile (NF) transversalement à une direction de déplacement (FR) d'un dispositif de capture et de pulvérisation (10), les informations d'image d'une unité de détection (14) étant traitées au moyen d'un contrôleur local (18) associé à l'unité de détection (14), des informations étant communiquées entre le contrôleur local (18) et un contrôleur principal (30) sur au moins un système de bus CAN (26) lors de la nécessité de commander au moins une vanne de dosage (20) du fluide ou de l'agent de pulvérisation (S) associée à la zone de capture (16) respective, le contrôleur principal (30) calculant un instant de commande de la vanne de dosage (20) et communiquant l'instant à un contrôleur de dosage local (25) associé à la vanne de dosage (20) par l'intermédiaire de l'au moins un système de bus CAN (26), et une synchronisation entre le contrôleur principal (30), le contrôleur local (18) et le contrôleur de dosage (25) pour l'activation à un moment précis de la vanne de dosage (20) étant effectuée en démarrant un premier compteur (32) dans le contrôleur principal (30), un deuxième compteur (34) dans le contrôleur local (18) et un troisième compteur (36) dans le contrôleur de dosage (25), par la capture de la valeur de compteur du premier compteur (32) par les deux autres compteurs (34, 36) et la prise en compte d'une différence entre les valeurs de compteur lors de la commande de la vanne de dosage (20) par le contrôleur de dosage (25).

2. Procédé selon la revendication 1,
**caractérisé en ce**
**que** la valeur de compteur du premier compteur (32) est envoyée à intervalles réguliers par l'intermédiaire de l'au moins un système de bus CAN (26), un rappel destiné à la mise à jour de la première valeur de compteur étant effectué immédiatement avant l'envoi de la valeur de compteur du premier compteur (32), et **en ce que** la différence entre la valeur de compteur du premier compteur (32) et du deuxième compteur (34) ainsi que la différence entre la valeur de compteur du premier compteur (32) et du troisième compteur (36) sont calculées et mémorisées à chaque réception par le contrôleur local (18) et le contrôleur de dosage (25).

3. Procédé selon la revendication 2,
**caractérisé en ce**
**que** lors de la réception de la valeur de compteur du premier compteur (32) dans le deuxième compteur (34) et le troisième compteur (36), un rappel pour capturer la valeur de compteur du deuxième compteur (34) et du troisième compteur (36) est effectué immédiatement.

4. Procédé selon l'une des revendications 1 à 3,
**caractérisé en ce**
**que** les compteurs (32, 34, 36) présentent une plage de 2³² - 1 pas avant de déborder et de recommencer à 0, un intervalle de temps de 1 µs étant prévu de préférence entre deux pas lors du comptage des compteurs (32, 34, 36).

5. Procédé selon l'une des revendications 1 à 4,
**caractérisé en ce**
**que** les informations des contrôleurs locaux (18) sont injectées individuellement dans l'au moins un système de bus CAN (26) selon une séquence spécifiée et à des intervalles définis.

6. Procédé selon l'une des revendications 1 à 5,
**caractérisé en ce**
**que** le démarrage des trois compteurs (32, 34, 36) s'effectue à des moments différents.

7. Procédé selon l'une des revendications 1 à 6,
**caractérisé en ce**
**que** la durée d'un message envoyé par le contrôleur principal (30) concernant la valeur de compteur du premier compteur (32) entre l'envoi du message et la réception par le contrôleur local (18) et/ou le contrôleur de dosage (25) est détectée et prise en compte lors du calcul de la différence entre la valeur de compteur du premier compteur (32) et la valeur de compteur du deuxième compteur (34) ainsi qu'entre la valeur de compteur du premier compteur (32) et la valeur de compteur du troisième compteur (36).

8. Procédé selon l'une des revendications 1 à 7,
**caractérisé en ce**
**que** le calcul de l'instant d'activation de la vanne de dosage (20) par le contrôleur de dosage (25) est effectué à l'aide de la géométrie et/ou de la disposition de la zone de capture (16) de l'unité de détection (14) et de la vanne de dosage (20) par rapport à la zone utile (NF) agricole, une vitesse de déplacement d'un véhicule agricole (1) transportant le dispositif de capture et de pulvérisation (10) dans la direction de déplacement (FR) ainsi que des paramètres de la vanne de dosage (20).

9. Dispositif de capture et de pulvérisation (10) pour un véhicule agricole (1), possédant une pluralité d'unités de détection (14) d'enregistrement d'image, une pluralité de vannes de dosage (20) associées aux unités de détection (14), une pluralité de contrôleurs locaux (18) associés aux unités de détection (14) d'enregistrement d'image et une pluralité de contrôleurs de dosage (25) associés aux vannes de dosage (20), et comprenant également un contrôleur principal (30), le contrôleur principal (30), les contrôleurs locaux (18) et les contrôleurs de dosage (25) étant reliés entre eux pour la transmission de données au moyen d'au moins un système de bus CAN (26), et le contrôleur principal (30), les contrôleurs locaux (18) et les contrôleurs de dosage (25) étant configurés pour mettre en œuvre un procédé selon l'une des revendications 1 à 8.

10. Produit de programme informatique comprenant des instructions qui, lorsqu'elles sont exécutées sur un processeur, exécutent toutes les étapes de procédé selon l'une des revendications 1 à 8.

11. Support de données comprenant des moyens pour stocker le programme informatique selon la revendication 10.
